# Europäisches Patentamt

## European Patent Office

## Office européen des brevets

(11) Veröffentlichungsnummer: **0 069 165**
**B1**

(12) # EUROPÄISCHE PATENTSCHRIFT

(45) Veröffentlichungstag der Patentschrift:
08.08.84

(51) Int. Cl.³: **H 04 N 5/12, H 04 N 5/21**

(21) Anmeldenummer: **81105291.9**

(22) Anmeldetag: **08.07.81**

(54) Integrierte Schaltung für (Farb-)Fernsehgeräte.

(43) Veröffentlichungstag der Anmeldung:
**12.01.83 Patentblatt 83/2**

(45) Bekanntmachung des Hinweises auf die Patenterteilung:
**08.08.84 Patentblatt 84/32**

(84) Benannte Vertragsstaaten:
**DE FR GB IT NL**

(56) Entgegenhaltungen:
**DE - A - 2 643 520**
**DE - A - 3 022 727**
**DE - B - 1 919 674**
**DE - B - 2 144 551**
**DE - B - 2 525 927**

(73) Patentinhaber: **Deutsche ITT Industries GmbH, Hans-Bunte-Strasse 19 Postfach 840, D-7800 Freiburg (DE)**

(84) Benannte Vertragsstaaten: **DE**

(73) Patentinhaber: **ITT INDUSTRIES INC., 320 Park Avenue, New York, NY 10022 (US)**

(84) Benannte Vertragsstaaten: **FR GB IT NL**

(72) Erfinder: **Sauer, Wolfgang, Dipl.-Ing., Eisenlohrstrasse 12, D-7800 Freiburg (DE)**

(74) Vertreter: **Stutzer, Gerhard, Dr., Deutsche ITT Industries GmbH Patent- und Lizenzabteilung Hans-Bunte-Strasse 19 Postfach 840, D-7800 Freiburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine integrierte Schaltung für (Farb-)Fernsehgeräte mit einem spannungs- oder stromgesteuerten Horizontaloszillator, einem Amplitudensieb, einer Synchronimpuls-Abtrennstufe und einer Frequenz/Phasenvergleichsstufe, die den Horizontaloszillator synchronisiert, der ein aus einem einzigen Kondensator und einer ersten Schwellwertstufe mit zwei festen Schaltschwellen bestehender Sägezahnoszillator ist, vergleiche den Oberbegriff des Patentanspruchs. Derartige integrierte Schaltungen sind beispielsweise aus der Zeitschrift »Elektronik aktuell«, 1976, Nr. 2, Seiten 7, 13, 14 unter der Bezeichnung TDA 9400 und TDA 9500 bekannt.

Insbesondere aufgrund der Tatsache, daß sowohl das Amplitudensieb als auch der Horizontaloszillator in Form des erwähnten Sägezahnoszillators auf einem einzigen Halbleiterkörper realisiert sind, ergibt sich die Möglichkeit, daß von den einzelnen Stufen ausgehende Belastungs-Störimpulse über die Versorgungsspannungsleitung den Horizontaloszillator, und zwar dessen Schwellwertstufe, dahingehend störend beeinflussen, daß die untere oder die obere oder nacheinander beide Schaltschwellen von der Spannung am Kondensator durch die Störungsüberlagerung vorzeitig überschritten werden, so daß der Oszillator eine »falsche« Frequenz- bzw. Phasenlage hat. Diese Frequenz/Phasenänderung wird zwar von der Schaltung mittels der Synchronimpulse ausgeglichen, jedoch nur so, daß die Störung im Fernsehbild sichtbar bleibt.

Hier will die im Anspruch gekennzeichnete Erfindung Abhilfe schaffen, indem sie die Aufgabe löst, eine integrierte Schaltung der eingangs näher beschriebenen Art so auszubilden, daß auf die Kondensatorspannung oder die internen Referenzspannungen für die Schaltschwellen (siehe unten) in der Nähe der beiden Schaltschwellen einstreuende Störimpulse nicht mehr die geschilderte nachteilige Wirkung haben können. Ein Vorteil der Erfindung ergibt sich somit unmittelbar aus der Lösung der gestellten Aufgabe.

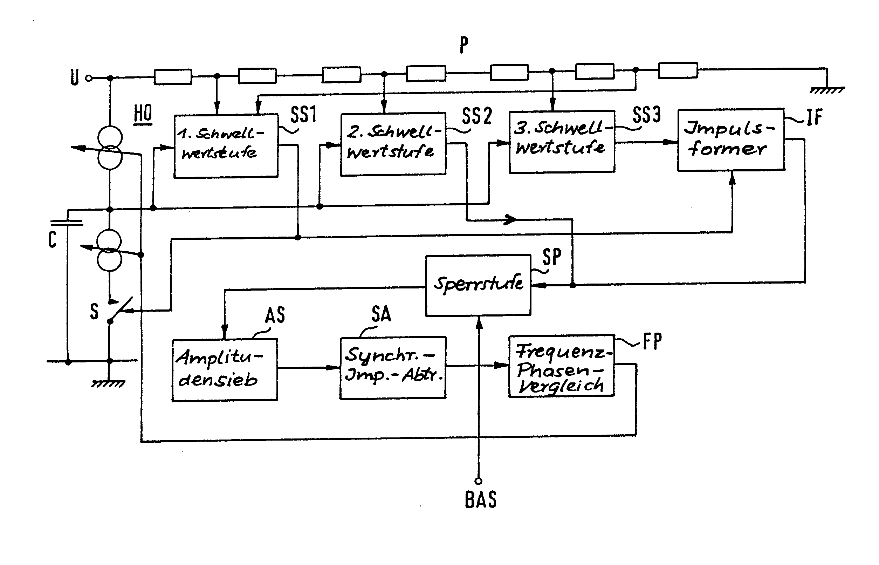

Die Erfindung wird nun anhand der Figur der Zeichnung näher erläutert. Sie zeigt in Form eines schematischen Blockschaltbilds den Aufbau einer erfindungsgemäßen integrierten Schaltung.

Der Horizontaloszillator HO enthält den am Schaltungsnullpunkt liegenden Kondensator C der über die beiden gezeigten Konstantstromquellen auf- bzw. entladen wird, wodurch somit an ihm die beabsichtigte Sägezahnspannung auftritt. Ferner enthält der Horizontaloszillator HO die erste Schwellwertstufe SS1, die eine obere und eine untere Schaltschwelle aufweist. Überschreitet die Kondensatorspannung eine der Schaltschwellen, so schaltet die erste Schwellwertstufe SS1 auf die andere Schaltschwelle um. Die beiden Schaltschwellen werden durch den an der Betriebsspannung U liegenden Spannungsteiler P vorgegeben, in dem die entsprechenden Schaltschwellen-Eingänge an entsprechenden Abgriffen angeschlossen sind. Der Ausgang der Schwellwertstufe SS1 steuert den elektronischen Schalter S, wodurch die damit verbundene Konstantstromquelle vom Schaltungsnullpunkt abgeschaltet bzw. diesem zugeschaltet wird. Im abgeschalteten Zustand wird somit der Kondensator C über die zu ihm in Serie liegende Konstantstromquelle aufgeladen, während im zugeschalteten Zustand der Kondensator C über die ersterwähnte und zu ihm parallelliegende Konstantstromquelle entladen wird, wenn, was selbstverständlich ist, der Strom der zum Kondensator C in Serie liegenden Konstantstromquelle kleiner ist als der parallelgeschalteten Konstantstromquelle.

Zur Vermeidung der eingangs geschilderten Nachteile sind nun die zweite und die dritte Schwellwertstufe SS2, SS3 vorgesehen, sowie der Impulsformer IF. Dem jeweiligen Eingang der beiden Schwellwertstufen SS2, SS3 ist die Kondensatorspannung, als das Sägezahnsignal, zugeführt, und sie weisen eine Schaltschwellspannung auf, die etwa 2 µs vor dem Erreichen des oberen bzw. unteren Scheitelwerts der Sägezahnspannung von dieser durchlaufen wird. Dies bedeutet, daß die Schaltschwellspannung der zweiten Schwellwertstufe SS2 etwas kleiner als die Spannung der oberen Schaltschwelle der ersten Schwellwertstufe SS1 und die Schaltschwellspannung der dritten Schwellwertstufe SS3 etwas größer als die Spannung der unteren Schaltschwelle der ersten Schwellwertstufe SS1 ist. Die beiden Schaltschwellen der Schwellwertstufen SS2, SS3 können somit in einfacher Weise durch weitere Abgriffe am Spannungsteiler P realisiert werden, wie dies in der Zeichnung dargestellt ist. So liegt die zweite Schwellwertstufe SS2 an einem Spannungsteilerabgriff unterhalb des für die obere Schaltschwelle gewählten Abgriffs und der Abgriff für die dritte Schwellwertstufe SS3 oberhalb des für die untere Schaltschwelle der ersten Schwellwertstufe SS1 gewählten Abgriffs.

Da sich im Bereich des unteren Umkehrpunkts des Sägezahnsignals ein zu breiter Ausgangsimpuls der dritten Schwellwertstufe SS3 ergibt, ist dieser der Impulsformer IF nachgeschaltet, der die Dauer des seinem Eingang zugeführten Ausgangsimpulses auf etwa die Dauer des Ausgangsimpulses der zweiten Schwellwertstufe SS2 verkürzt. Der Impulsformer IF kann beispielsweise durch ein, insbesondere digitales, Monoflop realisiert sein.

Die Ausgangsimpulse der zweiten Schwellwertstufe SS2 und des Impulsformers IF werden dann linear überlagert, was in der Zeichnung durch einfache Zusammenschaltung der entsprechenden beiden Leitungen angedeutet ist. Das kombinierte Signal liegt am Eingang der Sperrstufe SP, deren Signaleingang das Bild-Amplituden-Synchron-Signalgemisch BAS zugeführt ist und deren Ausgang das Amplitudensieb AS und die Synchronimpuls-Abtrennstufe SA ansteuert.

Mit dem kombinierten Signal kann auch eine Klemmstufe angesteuert werden, die die Arbeitspunkte des Amplitudensiebs AS und/oder der Synchronsignal-Abtrennschaltung SA auf ein solches Potential legt, daß sie nicht arbeitet.

Wenn nun das Sägezahnsignal in den Bereich seines oberen bzw. unteren Umkehrpunkts gelangt, erhalten das Amplitudensieb AS und die Synchronimpuls-Abtrennschaltung SA kein BAS-Signal zugeführt, so daß kurz vor und kurz nach den Umschaltpunkten die Signalverarbeitung in den beiden Stufen AS, SA unterbunden ist. Dies hat wiederum zur Folge, daß während diesen Zeiten sich keine Störimpulse der Betriebsspannung U überlagern können, so daß auch ein unbeabsichtigtes Triggern der ersten Schwellwertstufe SS1 unterbleibt.

In der Figur ist ferner noch gezeigt, daß das Amplitudensieb AS, die Synchronimpuls-Abtrennschaltung SA und die Frequenz/Phasenvergleichsschaltung FP signalflußmäßig hintereinandergeschaltet sind, wobei diese außerdem das Sägezahnsignal zugeführt erhält und ihr Ausgangssignal die beiden Stromquellen in regelndem Sinne beeinflußt. Dieses ist durch die Einstellpfeile an den beiden Stromquellen in der Figur angedeutet.

**Patentanspruch**

Integrierte Schaltung für (Farb-)Fernsehgeräte mit einem spannungs- oder stromgesteuerten Horizontaloszillator (HO), mit einem Amplitudensieb (AS), einer Synchronimpuls-Abtrennstufe (SA) und einer Frequenz-Phasenvergleichsstufe (FP), die den Horizontaloszillator (HO) synchronisiert, der ein einen einzigen Kondensator (C) und eine erste Schwellwertstufe (SS1) mit zwei festen Schaltschwellen enthaltender Sägezahnoszillator ist, gekennzeichnet durch folgende Merkmale:

— eine zweite und eine dritte, vom Sägezahnsignal eingangsseitig gespeiste Schwellwertstufe (SS2, SS3) mit jeweils einer Schaltschwelle, die etwa 2 µs vor dem Erreichen des oberen bzw. unteren Scheitelwerts des Sägezahnsignals von diesem durchlaufen wird, sind vorgesehen,
— dem Ausgang der dritten Schwellwertstufe (SS3) ist ein Impulsformer (IF) nachgeschaltet, der die Dauer ihres Ausgangsimpulses auf etwa die Dauer des Ausgangsimpulses der zweiten Schwellwertstufe (SS2) verkürzt, und
— die Ausgangsimpulse des Impulsformers (IF) und der zweiten Schwellwertstufe (SS2) liegen linear überlagert an dem einen Eingang einer Sperrstufe (SP), an deren anderem Eingang das Bild-Austast-Synchron-Signalgemisch (BAS) liegt und deren Ausgang mit dem Eingang des Amplitudensiebs (AS) verbunden ist, oder sie liegen linear überlagert an einer Klemmstufe, die die Arbeitspunkte des Amplitudensiebs (AS) und/oder der Synchronsignal-Abtrennschaltung (SA) auf ein solches Potential legt, daß sie nicht arbeiten.

**Claim**

Integrated circuit for (colour) television receivers, comprising a voltage- or current-controlled horizontal sweep generator (HO), an amplitude filter (AS), a synchronizing-signal separating circuit (SA) and a frequency/phase comparator (FP) which serves to synchronize the horizontal sweep generator (HO), with said generator being a sawtooth generator containing a single capacitor (C) and a first threshold stage (SS1) having two fixed thresholds, characterized by the following features:

— there are provided a second and a third threshold stage (SS2, SS3) each being supplied with the sawtooth signal on the input side, comprising each time one threshold which, approximately 2 µs prior to the reaching of the upper or the lower peak value of the sawtooth signal, is being passed thereby,
— the output of said third threshold stage (SS3) is followed by a pulse shaper (IF) which reduces the duration of the output pulse thereof to about the duration of the output pulse of said second threshold stage (SS2), and
— the output pulses of both said pulse shaper (IF) and said second threshold stage (SS2) are applied in a linearly superimposed manner to the input of a stopper circuit (blocking stage) (SP) to the signal input of which there is applied the composite video signal (BAS) and whose output is connected to the input of said amplitude filter (AS), or else they are applied in a linearly superimposed manner to a clamping circuit which applies the operating points of said amplitude filter (AS) and/or of said sync-signal separating circuit (SA) to such a potential that they are prevented from operating.

**Revendication**

Circuit intégré pour appareils de télévision, éventuellement de télévision en couleurs, comportant: un oscillateur horizontal (HO) commandé en tension ou courant; un filtre d'amplitude (AS); un étage (SA) de séparation d'impulsions de synchronisation; et un étage (FP) de comparaison de fréquence ou de phase qui synchronise l'oscillateur horizontal (HO), lequel est un oscillateur générateur de dents de scie contenant un seul condensateur (C) et un premier étage détecteur de seuil (SS1) avec deux seuils de commutation fixes; caractérisé par les caractéristiques suivantes:

— il est prévu un deuxième et un troisième étages détecteur de seuil (SS2, SS3) alimentés , côté entrée, par le signal en dents de scie et dotés chacun d'un seuil de commutation que le signal en dents de scie franchit environ 2 microsecondes avant d'atteindre son extremum supérieur ou, selon le cas, inférieur;

— la sortie du troisième étage détecteur de seuil (SS3) est suivie d'un formeur d'impulsions (IF) qui abrège la durée de son impulsion de sortie en la ramenant à environ la durée de l'impulsion de sortie du deuxième étage de valeur de seuil (SS2); et

— les impulsions de sortie du formeur d'impulsions (IF) et du deuxième étage détecteur de seuil (SS2) sont appliquées, linéairement superposées, à la première entrée d'un étage d'arrêt (SP) à l'autre entrée duquel est appliqué le signal composite »image-suppression-synchronisation« (BAS) et dont la sortie est reliée à l'entrée du filtre d'amplitude (AS), ou bien elles sont appliqués linéairement superposées, à un étage de blocage qui met les points de fonctionnement du filtre d'amplitude (AS) et/ou du circuit de séparation de signaux de synchronisation (SA) à un potentiel tel qu'ils n'opèrent pas.